(19) **Europäisches Patentamt / European Patent Office / Office européen des brevets**

(11) **EP 2 038 232 B1**

(12) **EUROPEAN PATENT SPECIFICATION**

(45) Date of publication and mention
of the grant of the patent:
**03.04.2019 Bulletin 2019/14**

(21) Application number: **07730014.3**

(22) Date of filing: **08.06.2007**

(51) Int Cl.:
**C03C 17/36** (2006.01)　　　　**C03C 17/38** (2006.01)

(86) International application number:
**PCT/EP2007/055657**

(87) International publication number:
**WO 2007/144311 (21.12.2007 Gazette 2007/51)**

(54) **MIRROR**

SPIEGEL

MIRROIR

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **16.06.2006 EP 06115593**

(43) Date of publication of application:
**25.03.2009 Bulletin 2009/13**

(73) Proprietor: **AGC Glass Europe**
**1348 Louvain-la-Neuve (BE)**

(72) Inventors:
• **VENTELON, Lionel**
 **6040 Jumet (BE)**

• **MARENNE, Ingrid**
 **6040 Jumet (BE)**

(74) Representative: **Bayot, Daisy et al**
**AGC Glass Europe**
**Technovation Centre**
**IP Department**
**Rue Louis Blériot, 12**
**6041 Gosselies (BE)**

(56) References cited:
**EP-A- 1 577 277　　WO-A-2004/113247**
**WO-A-2005/090256　　GB-A- 593 394**
**GB-A- 2 307 194　　US-A- 4 707 405**
**US-A- 5 215 832**

**Description**

This invention relates to mirrors and to a process of manufacturing mirrors.

The mirrors of this invention may have various applications, for example: domestic mirrors used for example in furniture, wardrobes or bathrooms; mirrors in make-up boxes or kits; mirrors used in the automotive industry, as rear-view mirrors for cars, for example. Such mirrors may be produced by applying a silver coating on glass sheets, particularly on soda lime glass, flat glass or float glass.

Conventionally, silver mirrors made by wet process (not by sputtering as in US5215832) have been produced as follows: the glass was first of all polished and then sensitised, typically using an aqueous solution of $SnCl_2$; after rinsing, the surface of the glass was usually activated by means of an ammoniacal silver nitrate treatment, and a silvering solution was then applied in order to form an opaque coating of silver; this silver coating was then covered with a protective layer of copper and then with one or more coats of leaded paint in order to produce the finished mirror. The combination of the protective copper layer and the leaded paint was deemed necessary to provide acceptable ageing characteristics and sufficient corrosion resistance.

More recently, Glaverbel developed mirrors which dispensed with the need for the conventional copper layer, which could use substantially lead-free paints and yet which still had acceptable or even improved ageing characteristics and corrosion resistance. US patent number 6,565,217 describes, for example, a mirror with no copper layer which comprises in the order recited: a vitreous substrate; both tin and palladium provided at a surface of the vitreous substrate; a silver coating layer on said surface of the substrate; tin present at the surface of the silver coating layer which is adjacent to a paint layer; and two paint layers covering the silver coating layer. Such mirrors provided a significant advance with respect to conventional coppered mirrors.

Such mirrors with no copper layer generally comprise a silver coating layer of around 80 nm to 90 nm thick such as those disclosed in US4707405 or GB2307194. It would be advantageous from a cost perspective to reduce the thickness of the silver coating. However, it has been found that reducing the thickness of the silver layer can aggravate or provoke an optical defect: the presence of a mottled colour visible to the naked eye perceivable at the bottom of the silver layer, particularly when looking at the silver layer of the mirror through the glass at a small angle (between about 5° -15°) with respect to the glass surface.

According to one of its aspects, the present invention provides a mirror with no copper layer as defined by claim 1. Other claims define preferred and/or alternative aspects of the invention.

The inventors suspect that one factor affecting the defect perceived as a mottled colour may be the homogeneity of the thickness of the silver coating. Inhomogeneities in the silver coating layer may be unintentionally introduced by the spraying process used to deposit the silver layer and/or by other process parameters. Such inhomogeneities may create zones within the silver coating at which the local thickness of the silver coating is so thin so as to allow the paint to be partially visible through the silver. Indeed, when the thickness of the silver coating layer is decreased in a mirror with no copper layer as described above which usually uses a red paint adjacent to the silver coating layer, the defect may be perceived as red clouds visible to naked eye in the bottom of the silver, particularly when looking at a small angle. Such a defect is sometimes called a "sky". The inventors suspect that the way this type of defect is seen may be linked to the difference in the local luminous reflection at relatively thicker and thinner portions of the silver coating.

In one of its aspects, the invention preferably reduces the occurrence of this type of defect being perceived. In another aspect, the invention allows for the use of thinner silver coatings without this defect becoming debilitating.

The invention provides a mirror which can be manufactured at lower cost and which may comprise less silver than already known mirrors, whereas keeping a good reflectance and being aesthetically as acceptable as previous known mirrors. In addition, mirrors according to the invention may offer at least an equal resistance to ageing and/or corrosion than conventional mirrors with a copper layer or already known mirrors without a copper layer.

Mirrors according to the invention comprise a paint layer covering the silver coating layer and adjacent to it, whose colour is characterised by L* lower than 40; preferably L* may be lower than 39, lower than 38, or lower than 37, and more preferably lower than 36, lower than 35, or lower than 32. It has been found that using a colour which absorbs light, or at least which does not reflect too much light, for the paint immediately behind the silver may avoid seeing a coloured sky in the silver coating layer when looking at the mirror from the glass side.

Advantageously, the colour of the paint layer adjacent to the silver coating layer may match or at least be close to the colour of the bottom of the silver coating, i.e. black. This may avoid seeing inhomogeneities in the silver. Preferably, a* of the paint layer adjacent to the silver coating layer may be in the range -10 to +10, -8 to +8, more preferably -6 to +6, -5 to +5, -4 to +4, and still more preferably -3 to +3, -2 to +2. Preferably, b* of the paint layer adjacent to the silver coating layer may be in the range -10 to +10, -8 to +8, more preferably -6 to +6, -5 to +5, -4 to +4, and still more preferably -3 to +3, -2 to +2.

In a preferred embodiment, the colour of the mirror seen from the glass side may be characterised by the fact that there exists no point of the reflective silver coating of the mirror which has a difference in colour ΔE with any other point of the reflective silver coating of the mirror, measured at an angle of 90°, of more than 1.6, preferably more than 1.7, more than 1.8, more preferably more than 1.9, more than 2.0, more than 2.1, more than 2.2.

L, a*, b* are colour coordinates defined in the CIELAB 1976 space. ΔE represents the difference in colour between two points: $\Delta E = \sqrt{(\Delta L^*)^2 + (\Delta a^*)^2 + (\Delta b^*)^2}$ .

Preferably, the silver coating layer has a thickness of less than 80 nm, or less than 75 nm, more preferably less than 70 nm, less than 67 nm, less than 65 nm, less than 63 nm or less than 60 nm, and preferably not less than 55 nm. Such thicknesses allow to obtain an acceptable luminous reflectance for the mirror and good aesthetics, without visible sky, whilst reducing the production cost. The silver coating layer may advantageously comprise less than 700 mg of silver per m$^2$ of glass, less than 670 mg/m$^2$, less than 650 mg/m$^2$, less than 630 mg/m$^2$, or less than 600 mg/m$^2$, and preferably not less than 550 mg/m$^2$. The thickness or quantity of silver may be known by analysing a 3.7 cm x 3.7 cm mirror sample by fluorescence-X or by titrating a silver solution coming from the acid attack of the silver coating layer of a 10 cm x 10 cm mirror sample.

The minimum thickness of silver acceptable without the final product showing a "sky", or before this defect becomes debilitating, depends of course on the colour of the paint adjacent to the silver coating layer, in particular its L*, but also on various process parameters like, for example, the silvering solution composition, the silvering solution provider, the physicochemical properties of the glass before silvering, or the spraying system. Generally speaking, the silver coating layer may advantageously show, at any 3.7 cm x 3.7 cm region of its whole surface, not less than a quantity of 640 mg of silver per m$^2$ of glass, averaged over said region.

Preferably, the finished mirrors according to this invention may have a luminous reflectance of at least 80%, at least 82%, more preferably at least 83%, at least 85%, at least 88%, and still more preferably at least 90% measured through the glass substrate. The luminous reflection may be less than 98%, less than 96% or less than 95%.

Advantageously, one or more material may be deposited during an activating step on a surface of the glass substrate on which the silver layer is to be deposited; this may contribute to the corrosion resistance of the mirror. Such material may be palladium, for example. Tin may be provided at or on a surface of the glass substrate on which the silver layer is to be deposited; this may sensitise the glass substrate and may facilitate adhesion of the silver layer thereto. The glass substrate may be sensitised prior to being activated, activated prior to being sensitised or sensitised and activated simultaneously. Preferably, one or more material may be deposited during a passivating step on the surface of the silver coating layer on which the paint layer is to be deposited; this may contribute to the corrosion resistance of the mirror. Such material may be tin or palladium, for example.

Materials provided at the surface of the glass substrate during an activating and/or sensitising step and/or at the surface of the silver layer during a passivating step are preferably provided as islets, that is to say that preferably they do not produce a distinct continuous layer of, for example, palladium, but that the material is in the form of islets on the surface of the glass.

In a preferred embodiment, the paint layer or at least one of the paint layers applied over the silver layer is lead-free or substantially lead-free. Conventionally, silver coating layers of mirrors were protected by an overcoat of copper. The copper layer was itself protected from abrasion and corrosion by a layer of paint. The paint formulations which afforded acceptable levels of protection against ageing and/or corrosion contained lead pigments. The proportion of lead in such a leaded paint layer could be around 13000 mg/m$^2$. The mirrors according to the present invention not only dispense with the need for a copper layer but they also allow the use of paints which are substantially lead-free. This is advantageous in that lead is toxic and its avoidance has environmental benefits. Substantially lead-free means herein that the proportion of lead in the paint is significantly less than the proportion of lead in leaded paints conventionally used for mirrors. The proportion of lead in a substantially lead-free paint layer as herein defined is less than 500 mg/m$^2$, preferably less than 400 mg/m$^2$, more preferably less than 300 mg/m$^2$. The proportion of lead in a lead-free paint layer as herein defined is less than 100 mg/m$^2$, preferably less than 80 mg/m$^2$, more preferably less than 60 mg/m$^2$. Paints used herein may be acrylic, epoxy, alkyd, etc.

Traces of silane may be present at the surface of the silver coating layer which is provided adjacent to the at least one paint layer covering the silver coating layer. The treatment of the silver coating layer with a silane before painting may enhance and/or contribute towards the resistance of the mirror to abrasion and/or corrosion.

Mirrors according to the invention preferably have good ageing and corrosion resistance, preferably at least comparable to the ageing and corrosion resistance of mirrors of the type described in US patent number 6,565,217.

One indication of the corrosion resistance and/or resistance to ageing of a mirror incorporating a silver film can be given by subjecting it to a copper-accelerated acetic acid salt spray test known as the CASS test in which the mirror is placed in a testing chamber at 50°C and is subjected to the action of a fog formed by spraying an aqueous solution containing 50 g/l sodium chloride, 0.26 g/l anhydrous cuprous chloride with sufficient glacial acetic acid to bring the pH of the sprayed solution to between 3.1 and 3.3. Full details of this test are set out in International Standard ISO 9227-1990. Mirrors may be subjected to the action of the saline fog for different lengths of time, whereafter the reflective properties of the artificially aged mirror may be compared with the reflective properties of the freshly formed mirror. An exposure time of 120 hours gives a useful indication of the resistance of a mirror to ageing. The CASS test is performed on 10 cm square mirror tiles having freshly cut edges, and after exposure to the copper-accelerated acetic acid salt spray for 120 and 240 hours, each tile is subjected to microscopic examination. The principal visible evidence of corrosion is a darkening of the silver layer and peeling of the paint around the margins of the mirror. The extent of corrosion is noted at five regularly spaced sites on each of two opposed edges of the tile and the mean average of these ten measurements is calculated. One can also measure the maximum corrosion present at the margin of the tile to obtain a result which is again measured in micrometers; preferably, the maximum corrosion is less than 300 $\mu$m, more preferably less than 250 $\mu$m or less than 200 $\mu$m. For a more representative evaluation, the CASS test may be performed on ten samples of a mirror and the mean average of the ten samples calculated from the mean average of each sample.

Another evidence of corrosion of mirrors is the apparition of white specks, visible by the naked eye or under an optical microscope, after the CASS test. These white specks are already defined in US 6,565,217. Preferably, mirrors according to the present invention have less than ten white specks per $dm^2$ following the CASS test, more preferably, less than five white specks per $dm^2$, or less than one white speck per $dm^2$.

In methods of manufacturing mirrors according to certain aspects of the invention, the sensitising, activating and passivating steps may contribute to the ageing and/or corrosion resistance of the mirrors and/or to their durability. Preferably the sensitising step is carried out prior to the activating step and the activating step before silvering. Preferably, the solutions brought into contact with the glass substrate during the successive manufacturing steps are sprayed onto the glass substrate with optional intervening rinsing and/or washing steps.

For example, during the industrial manufacture of flat mirrors, sheets of glass may pass through successive stations where sensitisation, activation, silvering and passivating reagents are sprayed. In practice, on a mirror production line, the sheets of glass are generally conveyed along a path by a roller conveyor. They are first of all polished and rinsed prior to being sensitised by means for example of a tin chloride solution sprayed on the glass; they are then rinsed again. An activating solution is then sprayed onto the sheets of glass, this activating solution may be for example, an acidic aqueous solution of $PdCl_2$. The sheets of glass then pass to a rinsing station where demineralised water is sprayed, and then to the silvering station where a traditional silvering solution is sprayed, the silvering solution being combined upon application to the glass from two separately sprayed solutions, one solution comprising a silver salt and either a reducing agent or a base and the other solution comprising whichever component (a reducing agent or a base) which is absent from the solution containing the silver salt. The flow rate and concentration of the silvering solution sprayed onto the glass are controlled so as to form a layer of silver of a desired thickness, for example containing between 600 and 800 $mg/m^2$ of silver, preferably in the range 650-750 $mg/m^2$ of silver. The glass is then rinsed and directly after the rinsing of the silver coating, an aqueous solution of for example stannous chloride is sprayed onto the silvered glass sheets as they move forward along the conveyor. After a further rinsing, the mirrors may then be treated by spraying with a solution containing a silane. After rinsing and drying, the mirrors are covered with one or more paint layers. The paint is then cured or dried, for example in a tunnel oven. Preferably, the paint is applied onto the silvered substrates in the form of a continuous curtain of liquid paint falling onto the glass sheets in a curtain coating process. The paint layer adjacent to the silver coating layer is adapted to provide, once dried, a colour characterised by L* being less than 40.

The thickness of the glass substrate may be greater than 1 mm, 2 mm or 2.5 mm; it may be less than 10 mm, 8 mm or 6 mm. The thickness of the glass substrate may be within the range of 1.8 mm to 8.2 mm.

Embodiments of the invention will now be further described, by way of examples only, along with a comparative example.

Example 1

A mirror according to the invention is manufactured on a conventional mirror production line in which a flat sheet of clear soda lime float glass is conveyed along the line by a roller conveyor.

The sheet of glass is first of all polished, rinsed and then sensitised by means of a tin chloride solution, in the usual manner; it is then rinsed again. An acidic aqueous solution of $PdCl_2$ is then sprayed onto the sheet of glass following the teaching of US patent number 6,565,217. The sheet of glass then passes to a rinsing station where demineralised water is sprayed, and then to the silvering station where a traditional silvering solution is sprayed to form a layer containing approximately 720 mg/m2 of silver in example 1a (i.e. around 10% less than for standard mirrors) and 640 mg/m2 of silver in example 1b (i.e. around 20% less than for standard mirrors). The glass is then rinsed by spraying with water, and directly after the rinsing of the silver coating, a freshly formed acidified solution of tin chloride is sprayed onto the silvered glass sheets. The mirrors are then treated by spraying with a solution containing 0.1% by volume of $\gamma$-aminopropyl triethoxysilane (Silane A 1100 from Union Carbide).

After rinsing and drying, the mirrors are curtain coated with a single layer of black paint with a thickness of around 50 $\mu$m.

### Example 2

Example 2 is manufactured as described above in example 1 (but on another production line, and with a silvering solution coming from another provider), except that the silver layer contains approximately 700 mg/m2 of silver in example 2a and 650 mg/m2 of silver in example 2b and that two paint layers are deposited on the mirrors: a first one, adjacent to the silver coating is dark grey, and the second is green, each paint layer being around 25 $\mu$m thick.

### Comparative example

A comparative example not in accordance with the invention is manufactured as described above in example 1, except that two paint layers are deposited on the mirrors: a first one, adjacent to the silver coating is red, and the second is green, each paint layer being around 25 $\mu$m thick. The comparative example corresponds to a copperless mirror as previously known.

Mirrors manufactured in this manner are subjected to $\Delta E$ measurements; maximum values of $\Delta E$ between two points of identical mirrors are given below, in table I. Luminous reflectance (RL) of the mirrors are also shown.

| TABLE I | | Example 1 | | Example 2 | | comparative example | |
|---|---|---|---|---|---|---|---|
| | | example 1a | example 1b | example 2a | example 2b | comp ex a | comp ex b |
| silver quantity | | 720 mg/m$^2$ | 640 mg/m$^2$ | 700 mg/m$^2$ | 650 mg/m$^2$ | 720 mg/m$^2$ | 640 mg/m$^2$ |
| Colour of paint | L* | 26.54 | | 37,1 | | 44,2 | |
| adjacent to silver | a* | 0,03 | | 0,6 | | 32,12 | |
| coating layer | b* | -0,81 | | -5,5 | | 19,38 | |
| $\Delta E$, measured at an angle of 90° | | 0.05 | 1.32 | 0.05 | 0.15 | 0.1 | 2.1 "red sky" |
| RL mirror | | 90,4 | 88,25 | 92,15 | 92,15 | 90,45 | 87,21 |

### Example 3

Example 3 is manufactured as described above in example 1, except that the silver layer contains approximately 650 mg/m2 of silver in example 3b and that a different paint is used.

Mirrors manufactured in this manner are subjected to $\Delta E$ measurements; maximum values of $\Delta E$ between two points of identical mirrors are given below, in table II.

| TABLE II | | Example 3 | |
|---|---|---|---|
| | | example 3a | example 3b |
| silver quantity | | 720 mg/m$^2$ | 650 mg/m$^2$ |
| Colour of paint | L* | 36.76 | |
| adjacent to silver | a* | 1.53 | |
| coating layer | b* | -2.83 | |
| $\Delta E$, measured at an angle of 90° | | 0.35 | 2.01 visible "sky" |

Example 3 shows that for this particular configuration (production line, silvering solution and paint):

- an average quantity of silver of around 90% of the normal quantity is greatly enough to obtain a mirror without defect, whilst

- an average quantity of silver of around 80% of the normal quantity is too low to obtain a mirror without unacceptable defect.

All CIELAB values and luminous reflectance given herein are measured under illuminant D65 10°.

## Claims

1. A mirror with no copper layer which comprises a glass substrate, a silver coating layer provided at a surface of the glass substrate, and at least one paint layer covering the silver coating layer, wherein the silver coating made from a silvering solution has a thickness of less than 70 nm and the colour of the paint layer adjacent to the silver coating layer is **characterised by** $L^*$ being less than 40, preferably less than 38, preferably less than 35.

2. The mirror according to claim 1, wherein the colour of the paint layer adjacent to the silver coating layer is **characterised by** $a^*$ being in the range -10 to +10, preferably in the range -6 to +6, and $b^*$ being in the range -10 to +10, preferably in the range -6 to +6.

3. The mirror according to claim 1 or claim 2, wherein the colour of the mirror seen from the glass side is **characterised by** the fact that there exists no point of the reflective silver coating of the mirror which has a difference in colour $\Delta E$ with any other point of the reflective silver coating of the mirror, measured at an angle of 90°, of more than 1.8.

4. The mirror according to any preceding claim, wherein the silver coating layer has a thickness of less than 65 nm.

5. The mirror according to any preceding claim, wherein the silver coating layer comprises less than 700 mg/m$^2$ of silver, preferably less than 650 mg/m$^2$.

6. The mirror according to any preceding claim, wherein the luminous reflectance of the mirror is at least 83%.

7. The mirror according to any preceding claim, wherein the mirror has an average edge corrosion of less that 250 $\mu$m when subjected to a 120 hour CASS test.

8. The mirror according to any preceding claim, wherein palladium and tin are provided at the surface of the glass sheet.

9. The mirror according to any preceding claim, wherein tin is present at the surface of the silver coating layer which is adjacent to the paint layer.

10. The mirror according to any preceding claim, wherein traces of silane are present at the surface of the silver coating layer which is adjacent to the paint layer.

11. The mirror according to any preceding claim, wherein the paint layer is substantially lead-free or lead-free.

12. The mirror according to any preceding claim, wherein the paint layer is substantially black in colour.

13. The mirror according to any preceding claim, wherein the mirror comprises a single paint layer covering the silver coating layer.

## Patentansprüche

1. Spiegel ohne Kupferschicht, der ein Glassubstrat, eine Silberbeschichtungsschicht, die an einer Oberfläche des Glassubstrats vorgesehen ist, und mindestens eine Lackschicht, die die Silberbeschichtungsschicht bedeckt, umfasst, wobei die Silberbeschichtung, die aus einer Versilberungslösung hergestellt ist, eine Dicke von weniger als 70 nm aufweist, und die Farbe der Lackschicht benachbart zu der Silberbeschichtungsschicht **dadurch gekennzeichnet ist, dass** $L^*$ kleiner als 40, bevorzugt kleiner als 38, bevorzugt kleiner als 35 ist.

2. Spiegel nach Anspruch 1, wobei die Farbe der Lackschicht benachbart zu der Silberbeschichtungsschicht **dadurch gekennzeichnet ist, dass** $a^*$ in dem Bereich von -10 bis +10, bevorzugt in dem Bereich von -6 bis +6 liegt, und $b^*$ in dem Bereich von -10 bis +10, bevorzugt in dem Bereich von -6 bis +6 liegt.

3.  Spiegel nach Anspruch 1 oder Anspruch 2, wobei die Farbe des Spiegels von der Glasseite her gesehen durch die Tatsache gekennzeichnet ist, dass kein Punkt der reflektierenden Silberbeschichtung des Spiegels existiert, der einen Farbunterschied ΔE mit einem beliebigen anderen Punkt der reflektierenden Silberschicht des Spiegels an einem Winkel von 90° gemessen von mehr als 1,8 aufweist.

4.  Spiegel nach einem beliebigen vorstehenden Anspruch, wobei die Silberbeschichtungsschicht eine Dicke von weniger als 65 nm aufweist.

5.  Spiegel nach einem beliebigen vorstehenden Anspruch, wobei die Silberbeschichtungsschicht weniger als 700 mg/m$^2$ Silber, bevorzugt weniger als 650 mg/m$^2$ Silber umfasst.

6.  Spiegel nach einem beliebigen vorstehenden Anspruch, wobei die Lichtreflexion des Spiegels mindestens 83 % beträgt.

7.  Spiegel nach einem beliebigen vorstehenden Anspruch, wobei der Spiegel eine mittlere Kantenkorrosion von weniger als 250 μm aufweist, wenn er einem 120-stündigen CASS-Test unterzogen wird.

8.  Spiegel nach einem beliebigen vorstehenden Anspruch, wobei Palladium und Zinn an der Oberfläche der Glasscheibe vorgesehen sind.

9.  Spiegel nach einem beliebigen vorstehenden Anspruch, wobei Zinn an der Oberfläche der Silberbeschichtungsschicht, die zu der Lackschicht benachbart ist, vorliegt.

10. Spiegel nach einem beliebigen vorstehenden Anspruch, wobei Spuren von Silan an der Oberfläche der Silberbeschichtungsschicht, die zu der Lackschicht benachbart ist, vorliegen.

11. Spiegel nach einem beliebigen vorstehenden Anspruch, wobei die Lackschicht im Wesentlichen bleifrei oder bleifrei ist.

12. Spiegel nach einem beliebigen vorstehenden Anspruch, wobei die Farbe der Lackschicht im Wesentlichen schwarz ist.

13. Spiegel nach einem beliebigen vorstehenden Anspruch, wobei der Spiegel eine einzige Lackschicht umfasst, die die Silberbeschichtungsschicht bedeckt.


**Revendications**

1.  Miroir sans couche de cuivre qui comprend un substrat en verre, une couche de revêtement d'argent disposée sur une surface du substrat en verre et au moins une couche de peinture recouvrant la couche de revêtement d'argent, dans lequel le revêtement d'argent formé à partir d'une solution d'argenture a une épaisseur inférieure à 70 nm et la couleur de la couche de peinture adjacente à la couche de revêtement d'argent est **caractérisée en ce que** L* est inférieur à 40, de préférence inférieur à 38, de préférence inférieur à 35.

2.  Miroir selon la revendication 1, dans lequel la couleur de la couche de peinture adjacente à la couche de revêtement d'argent est **caractérisée en ce que** a* est dans la plage de -10 à +10, de préférence dans la plage de -6 à +6, et b* est dans la plage de -10 à +10, de préférence dans la plage de -6 à +6.

3.  Miroir selon la revendication 1 ou la revendication 2, la couleur du miroir vu du côté verre étant **caractérisée par** le fait il n'y a pas de point du revêtement d'argent réfléchissant du miroir qui a une différence de couleur ΔE avec un autre point du revêtement d'argent réfléchissant du miroir, mesurée à un angle de 90°, de plus de 1,8.

4.  Miroir selon une quelconque revendication précédente, dans lequel la couche de revêtement d'argent a une épaisseur inférieure à 65 nm.

5.  Miroir selon une quelconque revendication précédente, dans lequel la couche de revêtement d'argent comprend moins de 700 mg/m$^2$ d'argent, de préférence moins de 650 mg/m$^2$.

**6.** Miroir selon une quelconque revendication précédente, le facteur de réflexion lumineuse du miroir étant d'au moins 83 %.

**7.** Miroir selon une quelconque revendication précédente, le miroir ayant une corrosion moyenne des bords inférieure à 250 $\mu$m lorsqu'il est soumis à un essai CASS de 120 heures.

**8.** Miroir selon une quelconque revendication précédente, dans lequel du palladium et de l'étain sont disposés sur la surface de la feuille de verre.

**9.** Miroir selon une quelconque revendication précédente, dans lequel de l'étain est présent à la surface de la couche de revêtement d'argent qui est adjacente à la couche de peinture.

**10.** Miroir selon une quelconque revendication précédente, dans lequel des traces de silane sont présentes à la surface de la couche de revêtement d'argent qui est adjacente à la couche de peinture.

**11.** Miroir selon une quelconque revendication précédente, dans lequel la couche de peinture est pratiquement exempte de plomb ou exempte de plomb.

**12.** Miroir selon une quelconque revendication précédente, dans lequel la couche de peinture a une couleur pratiquement noire.

**13.** Miroir selon une quelconque revendication précédente, le miroir comprenant une seule couche de peinture recouvrant la couche de revêtement d'argent.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5215832 A
- US 6565217 B
- US 4707405 A
- GB 2307194 A